# EUROPÄISCHE PATENTANMELDUNG

(11) **EP 4 664 829 A1**
(43) Veröffentlichungstag der Anmeldung: **17.12.2025**
(21) Anmeldenummer: 25180882.0
(22) Anmeldetag: 04.06.2025
(51) Int. Cl.: H04L 9/40, H04L 9/32

(54) **INBETRIEBNAHME EINES DIGITALEN ZERTIFIKATS**

(30) Priorität: 12.06.2024 DE 102024116525
(71) Anmelder: VEGA Grieshaber KG, 77709 Wolfach (DE)
(72) Erfinder: Schutter, Hendrik, 76135 Karlsruhe (DE)
(74) Vertreter: Patentanwälte Bauer Vorberg Kayser

(57) **Zusammenfassung**

Die Erfindung betrifft ein Verfahren zur Inbetriebnahme eines digitalen Zertifikats eines Feldgeräts (1) auf einem Endgerät (2), das die folgenden Schritte umfasst: Versand einer Anfrage zur Übermittlung des digitalen Zertifikats an das Feldgerät (1) durch das Endgerät (2), Empfang der Anfrage zur Übermittlung des digitalen Zertifikats durch das Feldgerät (1), Versand von ausführbaren Zertifikatsdaten durch das Feldgerät (1) an das Endgerät (2) in Reaktion auf den Empfang der Anfrage zur Übermittlung des digitalen Zertifikats, wobei die ausführbaren Zertifikatsdaten ausführbare Instruktionen und das digitale Zertifikat umfassen, Empfang der ausführbaren Zertifikatsdaten durch das Endgerät (2), und, nach dem Empfang der ausführbaren Zertifikatsdaten durch das Endgerät (2), Ausführung der ausführbaren Zertifikatsdaten durch das Endgerät (2), wodurch das digitale Zertifikat auf dem Endgerät (2) installiert wird. Ferner wird ein Feldgerät (1) vorgeschlagen, das bei der Durchführung des oben genannten Verfahrens verwendet werden kann, sowie ein computerimplementiertes Verfahren zur Ausführung auf diesem Feldgerät (1).

## Beschreibung

Die Erfindung betrifft ein Verfahren zur Inbetriebnahme eines digitalen Zertifikats eines Feldgeräts auf einem Endgerät. Nach einem weiteren Aspekt der Erfindung wird ein Feldgerät vorgeschlagen, das bei der Durchführung dieses Verfahrens verwendet werden kann. Ferner wird ein computerimplementiertes Verfahren zur Ausführung auf diesem Feldgerät vorgeschlagen.

In der Prozessautomatisierungstechnik werden vielfach Feldgeräte eingesetzt, die zur Erfassung und/oder Beeinflussung von Prozessvariablen dienen. Beispiele für derartige Feldgeräte sind Füllstandmessgeräte, Grenzstandmessgeräte und Druckmessgeräte mit Sensoren, die die entsprechenden Prozessvariablen Füllstand, Grenzstand oder Druck erfassen. Typische Anwendungsszenarien für solche Feldgeräte umfassen Bereiche wie die Hochwasservorhersage, Lagerbestandsverwaltung oder auch andere dezentral verteilte Messaufgaben. Bekannte Feldgeräte der vorgenannten Art ermöglichen es, Messwerte zu übermitteln, sodass eine übergeordnete Einheit basierend auf dem ermittelten Messwert eine vorbestimmte Aktion auslöst. Beispielsweise kann basierend auf dem Messwert eines Füllstandmessgerätes bei Überschreiten eines Grenzwertes ein Zulauf geschlossen oder ein Ablauf geöffnet werden.

Um eine Bedienung, Konfiguration oder Überprüfung aus der Ferne zu ermöglichen, kann ein Feldgerät eine Zugriffsmöglichkeit über eine Netzwerkverbindung bereitstellen. So kann in dem Feldgerät beispielsweise eine Webserver-Anwendung implementiert sein. Diese kann eine Bedienoberfläche bereitstellen, auf die beispielsweise über das HTTP-Protokoll zugegriffen werden kann. Die Abkürzung HTTP steht für das Hypertext Transfer Protocol. So kann ein Benutzer aus der Ferne unter Nutzung eines Webbrowsers beispielsweise Geräteeinstellungen vornehmen oder Messwerte abrufen. Der Benutzer kann sich über ein Endgerät mit dem Feldgerät verbinden, beispielsweise über einen Personal Computer.

Aus Sicherheitsgründen wird eine verschlüsselte Kommunikation zwischen dem Feldgerät und dem Endgerät bevorzugt. Oftmals ist auch die Verwendung eines digitalen Zertifikats vorgesehen. Mit Hilfe des digitalen Zertifikats kann das Endgerät verifizieren, dass es sich bei einer Gegenstelle, mit der es kommuniziert, tatsächlich um das Feldgerät handelt. Dazu können bekannte Verfahren aus der Public-Key-Kryptographie eingesetzt werden. Beispielsweise kann eine gesicherte Kommunikation über das HTTPS-Protokoll hergestellt werden. Die Abkürzung HTTPS steht für das Hypertext Transfer Protocol Secure.

Die Kommunikation über das HTTPS-Protokoll setzt jedoch voraus, dass das Endgerät das digitale Zertifikat des Feldgeräts überprüfen kann. Dies ist beispielsweise möglich, falls das digitale Zertifikat vorab auf dem Endgerät hinterlegt wird, sodass vor der Kommunikation mit dem Feldgerät ein entsprechender Abgleich vorgenommen werden kann. Dies setzt eine fachmännische Installation des digitalen Zertifikats auf dem Endgerät voraus. Möchte ein Benutzer auf das Feldgerät über sein Endgerät zugreifen, dann muss er zunächst die Installation des digitalen Zertifikats vornehmen. Dazu kann er beispielsweise das digitale Zertifikat von dem Feldgerät über eine ungesicherte Verbindung herunterladen und das digitale Zertifikat auf dem Endgerät installieren. Die nachfolgende Kommunikation zwischen dem Endgerät und dem Feldgerät kann über das HTTPS-Protokoll erfolgen. Jedoch ist die Installation des digitalen Zertifikats vergleichsweise umständlich und kann gegebenenfalls nur durch technische Fachleute vorgenommen werden.

Der Erfindung liegt deshalb die Aufgabe zugrunde, ein vereinfachtes Verfahren zur Inbetriebnahme eines digitalen Zertifikats eines Feldgeräts auf einem Endgerät bereitzustellen. Es ist eine weitere Aufgabe der Erfindung, ein Feldgerät bereitzustellen, das im Zusammenhang mit diesem Verfahren eingesetzt werden kann. Es ist ferner eine Aufgabe der Erfindung, ein computerimplementiertes Verfahren zur Ausführung auf einem solchen Feldgerät bereitzustellen.

Die Aufgaben werden gelöst durch das Verfahren nach Anspruch 1, das Feldgerät nach Anspruch 14 und das computerimplementierte Verfahren nach Anspruch 15. Die abhängigen Patentansprüche betreffen optionale Ausgestaltungsformen der Erfindung. Es wird darauf hingewiesen, dass die in den unabhängigen und in den abhängigen Patentansprüchen aufgeführten Merkmale in beliebiger Weise miteinander kombiniert werden können, soweit dies technisch sinnvoll ist. Dies gilt auch über die Grenzen der Anspruchskategorien hinweg und auch dann, wenn ein Patentanspruch nicht auf einen anderen Patentanspruch rückbezogen ist. Die Beschreibung charakterisiert und spezifiziert die Erfindung insbesondere im Zusammenhang mit den Figuren zusätzlich. Die in der Beschreibung befindlichen Merkmale sind ebenfalls frei miteinander kombinierbar, sofern dies technisch sinnvoll ist.

Nach einem ersten Aspekt der Erfindung wird ein Verfahren zur Inbetriebnahme eines digitalen Zertifikats eines Feldgeräts auf einem Endgerät vorgeschlagen, wobei das digitale Zertifikat dem Feldgerät zugeordnet ist und zum Nachweis einer Identität des Feldgeräts bei einer Kommunikation mit dem Feldgerät über ein gesichertes Datenübertragungsprotokoll vorgesehen ist. Das Verfahren umfasst einen Versand einer Anfrage zur Übermittlung des digitalen Zertifikats an das Feldgerät durch das Endgerät und einen Empfang der Anfrage zur Übermittlung des digitalen Zertifikats durch das Feldgerät. In Reaktion auf den Empfang der Anfrage zur Übermittlung des digitalen Zertifikats erfolgt ein Versand von ausführbaren Zertifikatsdaten durch das Feldgerät an das Endgerät, wobei die ausführbaren Zertifikatsdaten ausführbare Instruktionen und das digitale Zertifikat umfassen. Ferner erfolgt ein Empfang der ausführbaren Zertifikatsdaten durch das Endgerät. Es folgt eine Ausführung der ausführbaren Zertifikatsdaten durch das Endgerät, wodurch das digitale Zertifikat auf dem Endgerät installiert wird. Somit wird das digitale Zertifikat auf dem Endgerät in Betrieb genommen.

Das digitale Zertifikat wird durch die Ausführung der ausführbaren Zertifikatsdaten auf dem Endgerät installiert. Dies erleichtert die Installation des digitalen Zertifikats für einen Benutzer des Endgeräts. Im Rahmen des erfindungsgemäßen Verfahrens stellt das Endgerät zunächst die Anfrage zur Übermittlung des digitalen Zertifikats. Hierbei kann es sich beispielsweise um eine Anforderung zum Download des digitalen Zertifikats handeln. Der Download kann erfindungsgemäß über eine Webseite erfolgen, die das Feldgerät bereitstellt. Es ist erfindungsgemäß möglich, dass auf dem Feldgerät eine Webserver-Applikation betrieben wird, die eine Konfiguration des Feldgeräts erlaubt. Die Webserver-Applikation kann erfindungsgemäß dazu geeignet sein, Daten über das HTTP-Protokoll sowie über das HTTPS-Protokoll bereitzustellen. Allgemeiner gesprochen kann die Webserver-Applikation dazu geeignet sein, Daten über ein ungesichertes Datenübertragungsprotokoll und über ein gesichertes Datenübertragungsprotokoll bereitzustellen.

Es ist erfindungsgemäß möglich, dass das Endgerät die Anfrage zur Übermittlung des digitalen Zertifikats nicht über das HTTP-Protokoll stellt. Beispielsweise ist eine Übermittlung der Anfrage über das FTP-Protokoll denkbar, sodass die Anfrage eine FTP-Anfrage sein kann. Im Anschluss erfolgt ein Versand von ausführbaren Zertifikatsdaten durch das Feldgerät an das Endgerät. Dies kann zum Beispiel über einen Download-Vorgang über das FTP-Protokoll umgesetzt werden, bei dem vorzugsweise eine FTP-Applikation des Feldgeräts die ausführbaren Zertifikatsdaten an das Endgerät sendet.

Die ausführbaren Zertifikatsdaten werden auf dem Endgerät ausgeführt. Durch die Ausführung der ausführbaren Zertifikatsdaten wird das digitale Zertifikat auf dem Endgerät installiert. Ein in diesem Rahmen durchgeführter Installationsvorgang kann, in Abhängigkeit von einem Betriebssystem des Endgeräts, ganz unterschiedliche Ausprägungen aufweisen. So ist es erfindungsgemäß möglich, dass das Zertifikat in einen bestimmten Ordner des Endgeräts kopiert wird, bestimmte Registry-Einstellungen auf dem Endgerät vorgenommen werden, bestimmte Programm- und/oder Systemeinstellungen auf dem Endgerät vorgenommen werden und/oder sonstige Schritte durchgeführt werden, die zur Aktivierung bzw. Installation des digitalen Zertifikats auf dem Endgerät erforderlich sind.

Bei dem Installationsvorgang kann nach einigen Ausführungsformen eine Interaktion mit dem Benutzer des Endgeräts notwendig sein. Beispielsweise kann es erforderlich sein, dass der Benutzer des Endgeräts den Installationsvorgang oder einen Teil des Installationsvorgangs durch eine Eingabe auf dem Endgerät bestätigt. Es kann ferner erforderlich sein, dass der Benutzer gewisse Daten eingibt, die für die Installation des digitalen Zertifikats erforderlich sind. Selbst falls die beschriebene Interaktion mit dem Benutzer notwendig sind, ist die Installation des digitalen Zertifikats mittels der ausführbaren Zertifikatsdaten einer manuellen Installation des digitalen Zertifikats vorzuziehen, da sich auch in diesem Fall eine erhebliche Vereinfachung des Installationsvorgangs ergibt. Nach dem Abschluss der Installation ist das Zertifikat bevorzugt sofort verwendbar, sodass es beispielsweise von einer Webbrowser-Applikation auf dem Endgerät unmittelbar genutzt werden kann. Nach denkbaren Varianten der Erfindung kann es allerdings auch erforderlich sein, dass der Benutzer nachfolgend noch eine oder mehrere Anpassungen an dem Endgerät vornehmen muss, um das digitale Zertifikat letztendlich durch das Endgerät nutzbar zu machen. Bei dem Endgerät kann es sich beispielsweise um einen Personal Computer, ein Notebook, einen Tablet PC, ein Smartphone oder einen sonstigen Rechner handeln.

Bevorzugt erfolgt bei der Durchführung des Verfahrens ein Versand mindestens einer Information betreffend ein Betriebssystem des Endgeräts von dem Endgerät an das Feldgerät sowie ein Empfang der mindestens einen Information betreffend das Betriebssystem des Endgeräts durch das Feldgerät, wobei die ausführbaren Zertifikatsdaten, die das Feldgerät an das Endgerät sendet, auf das Betriebssystem des Endgeräts abgestimmt sind. In Abhängigkeit von dem Betriebssystem auf dem Endgerät können unterschiedliche Schritte notwendig sein, um das digitale Zertifikat auf dem Endgerät zu installieren. Insbesondere können ausführbare Instruktionen, die auf einem ersten Betriebssystem ausgeführt werden können, nicht zwangsläufig auch auf einem zweiten Betriebssystem ausgeführt werden. Unter den ausführbaren Zertifikatsdaten, die auf das Betriebssystem des Endgeräts abgestimmt sind, sollen vorteilhaft ausführbare Zertifikatsdaten verstanden werden, die auf dem Endgerät ausgeführt werden können, wobei die Ausführung die Installation des digitalen Zertifikats auf dem Endgerät bewirkt.

Darüber hinaus kann es Unterschiede zwischen verschiedenen Betriebssystemversionen geben, sodass eine unterschiedliche Ausprägung der ausführbaren Zertifikatsdaten in Abhängigkeit von der eingesetzten Betriebssystemversion erforderlich sein kann. Die Information zu dem Betriebssystem kann zum Beispiel auf das Feldgerät übermittelt werden, indem eine Auswahl über ein Benutzerinterface des Feldgeräts getroffen wird. Beispielsweise könnte das Betriebssystem und/oder eine Betriebssystemversion des Endgeräts über eine Dropdown-Liste ausgewählt werden, die in einem durch das Feldgerät bereitgestellten Benutzerinterface dargestellt wird. Es ist erfindungsgemäß ferner möglich, dass das Feldgerät die mindestens eine Information zu dem Betriebssystem aus einem Datenfeld extrahiert, das ein Webbrowser des Endgeräts bei der Kommunikation mit einem Webserver des Feldgeräts übermittelt. Beispielsweise kann ein sogenanntes User-Agent-Feld ausgewertet werden, in dem Informationen zum verwendeten Webbrowser sowie zum verwendeten Betriebssystem gemäß dem HTTP-Protokoll von dem Endgerät an das Feldgerät übermittelt werden.

Bei der mindestens einen Information kann es sich insbesondere um einen Betriebssystemtyp handeln (z. B. Windows, MacOS oder GNU/Linux). In der mindestens einen Information ist optional ein Subtyp des Betriebssystems, eine Versionsnummer des Betriebssystems oder ein sonstiges Datum enthalten, das das Betriebssystem charakterisiert. In Abhängigkeit von der mindestens einen Information sendet das Feldgerät ausführbare Zertifikatsdaten an das Endgerät, die für das Endgerät bzw. dessen Betriebssystem geeignet sind. Somit kann das Verfahren mit unterschiedlichen Betriebssystemtypen oder -versionen durchgeführt werden.

Es ist vorteilhaft, wenn das Feldgerät in Reaktion auf den Empfang der mindestens einen Information betreffend das Betriebssystem des Endgeräts die ausführbaren Zertifikatsdaten aus einem Datenspeicher des Feldgeräts in Abhängigkeit von der mindestens einen Information zum Versand an das Endgerät auswählt. Beispielsweise kann das Feldgerät mehrere Varianten der ausführbaren Zertifikatsdaten vorhalten. In Abhängigkeit von beispielsweise einem Betriebssystemtyp und/oder einer Betriebssystemversion wird eine geeignete, d.h. bevorzugt zu dem Endgerät passende Variante der ausführbaren Zertifikatsdaten ausgewählt, aus dem Datenspeicher geladen und an das Endgerät gesendet.

Es kann erfindungsgemäß vorgesehen sein, dass das Feldgerät die ausführbaren Zertifikatsdaten von einer Gegenstelle empfängt und diese speichert. Das Feldgerät kann die ausführbaren Zertifikatsdaten, die es empfangen hat, beispielsweise in einem internen Datenspeicher des Feldgeräts speichern. Die ausführbaren Zertifikatsdaten sind dann zu einem späteren Zeitpunkt verfügbar. Bevorzugt empfängt das Feldgerät mehrere Varianten der ausführbaren Zertifikatsdaten und speichert diese ab. Bei der Gegenstelle kann es sich prinzipiell um eine beliebige Vorrichtung handeln, die über eine Netzwerkschnittstelle des Feldgeräts mit diesem kommunizieren kann. Bevorzugt handelt es sich bei der Gegenstelle um einen Update-Server, der beispielsweise von einem Hersteller des Feldgeräts bereitgestellt wird. Es kann sich aber auch um einen sonstigen Server, Computer oder dergleichen handeln. Bevorzugt werden die ausführbaren Zertifikatsdaten von der Gegenstelle verschlüsselt an das Feldgerät übermittelt, und besonders bevorzugt authentifiziert das Feldgerät vorhergehend die Gegenstelle, um ein ausreichendes Sicherheitsniveau zu gewährleisten.

Vorzugsweise generiert das Feldgerät in Reaktion auf den Empfang der mindestens einen Information betreffend das Betriebssystem des Endgeräts die ausführbaren Zertifikatsdaten so, dass sie zur Installation des digitalen Zertifikats auf dem Betriebssystem des Endgeräts geeignet sind. Nach dieser Variante der Erfindung greift das Feldgerät nicht etwa auf gespeicherte ausführbare Zertifikatsdaten zu, sondern generiert diese, wenn dies erforderlich ist. Unter der Generierung kann insbesondere verstanden werden, dass das digitale Zertifikat mit den ausführbaren Instruktionen in geeigneter Weise kombiniert wird. Nach Varianten der Erfindung können die ausführbaren Instruktionen so generiert werden oder so angepasst werden, dass sie für die Installation des digitalen Zertifikats auf dem Betriebssystem des Endgeräts geeignet sind. Dies kann insbesondere dann von Nutzen sein, falls es eine Vielzahl unterschiedlicher Ausprägungen von Betriebssystemvarianten gibt, sodass nicht sämtliche erforderlichen Varianten der ausführbaren Zertifikatsdaten in einem Datenspeicher des Feldgeräts vorgehalten werden können. In diesem Fall kann das Feldgerät die ausführbaren Zertifikatsdaten in Abhängigkeit von dem Betriebssystem des Endgeräts erstellen. Es ist erfindungsgemäß möglich, dass das Feldgerät die generierten ausführbaren Zertifikatsdaten zur späteren Weiterverwendung abspeichert. Eine Generierung der ausführbaren Zertifikatsdaten liegt auch dann vor, wenn ein bestehendes Programmmuster für die ausführbaren Zertifikatsdaten lediglich angepasst wird, beispielsweise durch eine Änderung eines hinterlegten Installationspfades oder durch eine Anpassung einer Versionsnummer, eines Identifiers oder dergleichen.

Vorzugsweise erfolgt bei der Durchführung des Verfahrens ein Empfang des digitalen Zertifikats durch das Feldgerät von einer Gegenstelle, eine Generierung der ausführbaren Zertifikatsdaten durch das Feldgerät und eine Speicherung der ausführbaren Zertifikatsdaten durch das Feldgerät. Gemäß dieser Ausführungsform erhält das Feldgerät von der Gegenstelle lediglich das digitale Zertifikat. Somit ist es erforderlich, dass das Feldgerät die ausführbaren Zertifikatsdaten generiert. Dies kann erfindungsgemäß erfolgen, indem das digitale Zertifikat mit ausführbaren Instruktionen kombiniert wird.

Nach einer vorteilhaften Ausführungsform der Erfindung sind die ausführbaren Zertifikatsdaten in einer ausführbaren Datei enthalten. Somit kann eine einzelne ausführbare Datei für den Benutzer bereitgestellt werden, die dieser lediglich ausführen muss. Der Benutzer muss in diesem Fall nicht mit mehreren Dateien arbeiten oder sogar mehrere Dateien beispielsweise von dem Feldgerät separat herunterladen. Es kann alternativ vorgesehen sein, dass die ausführbaren Instruktionen und das digitale Zertifikat nicht in einer ausführbaren Datei hinterlegt sind, sondern in einer Datei eines sonstigen Typs. So ist es erfindungsgemäß möglich, dass die Daten in einer Containerdatei hinterlegt sind, insbesondere in einer komprimierten Containerdatei, zum Beispiel einem ZIP-Archiv, das die ausführbaren Zertifikatsdaten bildet.

Nach einer möglichen Variante der Erfindung ist die Datei eine ausführbare Binärdatei. So kann beispielsweise für das Windows-Betriebssystem eine ausführbare .EXE- oder .MSI-Datei bereitgestellt werden. Andere Beispiele für ausführbare Binärdateien sind Dateien im ELF-Format unter dem Betriebssystem GNU/Linux oder das Mach-O-Format unter dem Betriebssystem macOS. In der Binärdatei können sowohl ausführbare Instruktionen enthalten sein als auch das digitale Zertifikat.

Alternativ kann es sich bei der Datei um die Datei eine Skriptdatei handeln. Eine Skriptdatei zeichnet sich dadurch aus, dass sie durch einen Interpreter ausgeführt wird. Dazu zählen beispielsweise PowerShell-Skripte unter Windows oder Shell-Skripte unter Linux und macOS. Eine Skriptdatei kann in der Regel genauso einfach aufgerufen werden wie eine Binärdatei, sodass meist keine Nachteile im Hinblick auf die Benutzerfreundlichkeit vorliegen. Skriptdateien weisen allerdings den Vorteil auf, dass sie vergleichsweise einfach erstellt oder verändert werden können, da in der Regel kein Binärcode generiert oder geändert werden muss. Somit eignen sie sich ganz besonders gut zur Generierung durch das Feldgerät. In der Skriptdatei können sowohl die ausführbaren Instruktionen enthalten sein (vorzugsweise ausführbare Skriptzeilen) als auch das digitale Zertifikat (vorzugsweise eingebettet in Form von Textdaten, auf die die ausführbaren Instruktionen zugreifen können).

Vorzugsweise führt das Endgerät bei der Ausführung der ausführbaren Zertifikatsdaten zumindest die folgenden Schritte durch: Falls sich das Endgerät nicht in einem Administratormodus befindet, Erstellung einer Benutzeranfrage zum Wechsel des Endgeräts in den Administratormodus, und, falls in Reaktion auf die Benutzeranfrage eine Benutzereingabe auf dem Endgerät erfolgt, die den Wechsel in den Administratormodus freigibt: Wechseln des Endgeräts in den Administratormodus und Kopieren des digitalen Zertifikats in einen Zertifikatsspeicher des Endgeräts. Falls sich das Endgerät bereits in dem Administratormodus befindet, ist es nur notwendig, dass das digitale Zertifikat in den Zertifikatsspeicher des Endgeräts kopiert wird.

Damit das digitale Zertifikat installiert werden kann, ist es oftmals notwendig, dass sich das Betriebssystem in einem Administratormodus befindet. In dem Administratormodus liegen weitergehende Rechte vor. Dabei kann es sich insbesondere um Rechte handeln, die zur Modifikation von System- und/oder Betriebssystemeinstellungen erforderlich sind. Häufig ist eine Installation des digitalen Zertifikats ohne Administratorrechte nicht möglich. Nach der beschriebenen Vorgehensweise wird bevorzugt zunächst eine Benutzeranfrage zum Wechseln in den Administratormodus erstellt, falls sich das Betriebssystem nicht in dem Administratormodus befindet. In diesem Fall erfolgt beispielsweise eine Aufforderung an den Benutzer des Endgeräts, in den Administratormodus zu wechseln, damit die ausführbaren Zertifikatsdaten ausgeführt werden können. Hierbei kann der Benutzer beispielsweise zur Eingabe eines Administratorpassworts aufgefordert werden.

Nach dem Wechsel in den Administratormodus wird das digitale Zertifikat installiert. Dies erfolgt bevorzugt, indem das digitale Zertifikat in einen Zertifikatsspeicher des Betriebssystems kopiert wird. Dabei kann es sich beispielsweise um einen Dateipfad handeln, unter dem digitale Zertifikate des Betriebssystems hinterlegt werden können. Anwendungen auf dem Endgerät, beispielsweise Webbrowser, greifen auf diesen Dateipfad zu, um auf dem Betriebssystem installierte digitale Zertifikate auszulesen. Falls sich das Betriebssystem bereits in dem Administratormodus befindet, ist keine Benutzerabfrage zum Wechsel in den Administratormodus erforderlich, und digitale Zertifikat kann bevorzugt unmittelbar in den Zertifikatsspeicher kopiert werden. Im Rahmen des erfindungsgemäßen Verfahrens können die ausführbaren Zertifikatsdaten auch noch weitere Instruktionen enthalten, zum Beispiel zur Ausgabe von Informationen an einen Benutzer des Endgeräts oder zur Abfrage zusätzlicher Informationen von dem Benutzer, die für die Installation des digitalen Zertifikats auf dem Endgerät erforderlich sind.

Es ist bevorzugt, wenn nach der Installation des digitalen Zertifikats auf dem Endgerät die folgenden Schritte durchgeführt werden: Versand einer Anfrage zum Aufbau einer Verbindung über das gesicherte Datenübertragungsprotokoll durch das Endgerät an das Feldgerät, Empfang der Anfrage zum Aufbau der Verbindung über das gesicherte Datenübertragungsprotokoll durch das Feldgerät, Übermittlung von Authentifizierungsdaten durch das Feldgerät an das Endgerät, Überprüfung der Authentifizierungsdaten durch das Endgerät anhand des digitalen Zertifikats, und, falls die Überprüfung erfolgreich ist, Kommunikation über das gesicherte Datenübertragungsprotokoll durch das Endgerät und das Feldgerät. Nachdem das digitale Zertifikat auf dem Endgerät installiert wurde, ist eine Kommunikation über das gesicherte Datenübertragungsprotokoll zwischen dem Endgerät und dem Feldgerät möglich.

Zur Einleitung des Kommunikationsvorgangs stellt das Endgerät bei dem Feldgerät eine Anfrage zum Aufbau einer entsprechend gesicherten Verbindung. Das Feldgerät übermittelt nun die Authentifizierungsdaten an das Endgerät. Bei den Authentifizierungsdaten kann es sich beispielsweise um das digitale Zertifikat handeln, es kann sich aber auch um sonstige Daten handeln, die eine Authentifizierung des Feldgeräts anhand des digitalen Zertifikats, das in dem Endgerät hinterlegt ist, ermöglichen. Die Authentifizierung kann beispielsweise auch anhand kryptographischer Schlüssel und/oder anhand kryptographischer Signaturen erfolgen.

Nach einer vorteilhaften Ausführungsform der Erfindung handelt es sich bei dem gesicherten Übertragungsprotokoll um das HTTPS-Protokoll. Das HTTPS-Protokoll ist ein Internet-Kommunikationsprotokoll, mit dem Daten verschlüsselt übertragen werden können und das auch eine Authentifizierung von Kommunikationsteilnehmern erlaubt. Es kann sich bei dem gesicherten Übertragungsprotokoll jedoch auch um ein sonstiges Protokoll zur Übertragung von Daten handeln, das eine Verschlüsselung sowie eine Authentifizierung erlaubt. Das digitale Zertifikat ist bevorzugt ein digitales Zertifikat nach dem Standard X.509. Der Standard X.509 ist ein ITU-T-Standard zum Erstellen digitaler Zertifikate. Es ist aber erfindungsgemäß auch möglich, dass ein anderes digitales Zertifikat eingesetzt wird.

Nach einem weiteren Aspekt der Erfindung wird ein Feldgerät vorgeschlagen, mit einem Sensor zur Erfassung eines Messwerts, mit einer Netzwerkschnittstelle und mit einer Vorrichtung zur Datenverarbeitung, wobei die Vorrichtung zur Datenverarbeitung dazu eingerichtet ist, eine Bedienmöglichkeit zur Bedienung des Feldgeräts mittels der Netzwerkschnittstelle über ein gesichertes Datenübertragungsprotokoll bereitzustellen, und wobei die Vorrichtung zur Datenverarbeitung ferner dazu eingerichtet ist, eine Anfrage zur Übermittlung eines digitalen Zertifikats von einem Endgerät mittels der Netzwerkschnittstelle zu empfangen, wobei das digitale Zertifikat dem Feldgerät zugeordnet ist und zum Nachweis einer Identität des Feldgeräts bei einer Kommunikation mit dem Feldgerät über das gesicherte Datenübertragungsprotokoll vorgesehen ist. Ferner ist die Vorrichtung zur Datenverarbeitung dazu eingerichtet, in Reaktion auf den Empfang der Anfrage zur Übermittlung des digitalen Zertifikats einen Versand von ausführbaren Zertifikatsdaten an das Endgerät mittels der Netzwerkschnittstelle auszulösen, wobei die ausführbaren Zertifikatsdaten ausführbare Instruktionen und das digitale Zertifikat umfassen.

Somit kann das erfindungsgemäße Feldgerät im Zusammenhang mit dem vorhergehend beschriebenen Verfahren verwendet werden. Das Feldgerät kann sämtliche Merkmale aufweisen, die schon vorangehend in Bezug auf das Feldgerät beschrieben wurden. Das Feldgerät kann erfindungsgemäß zur Messung eines Füllstands, eines Grenzstands, eines Drucks oder eines sonstigen Messwerts geeignet sein. Bei der Netzwerkschnittstelle kann es sich beispielsweise um eine Ethernet-Schnittstelle oder eine WLAN-Schnittstelle handeln. Es ist aber auch möglich, dass es sich um eine sonstige Netzwerkschnittstelle handelt, zum Beispiel eine Zweileiter-Schnittstelle. Die Bedienmöglichkeit zur Bedienung des Feldgeräts mittels der Netzwerkschnittstelle wird vorzugsweise durch eine auf dem Feldgerät installierte Webserver-Applikation implementiert. Diese stellt vorzugsweise eine Möglichkeit bereit, das Feldgerät zu konfigurieren und/oder Daten des Feldgeräts abzurufen. Hierzu kann erfindungsgemäß eine Benutzeroberfläche des Feldgeräts bereitgestellt werden, die über einen Webbrowser aufrufbar ist. Bei der Vorrichtung zur Datenverarbeitung kann es sich erfindungsgemäß um einen Microcontroller, einen eingebetteten Computer oder einen sonstigen Rechner bzw. eine sonstige Rechnereinheit des Feldgeräts handeln. Die Vorrichtung zur Datenverarbeitung ist bevorzugt mit dem Sensor und/oder mit der Netzwerkschnittstelle des Feldgeräts verbunden. Es ist erfindungsgemäß ferner möglich, dass das Feldgerät einen Datenspeicher aufweist, der bevorzugt ebenfalls mit der Vorrichtung zur Datenverarbeitung verbunden ist.

Nach einer vorteilhaften Ausführungsform der Erfindung kann das Feldgerät mindestens eine Information betreffend das Betriebssystem des Endgeräts über die Netzwerkschnittstelle des Feldgeräts zu empfangen. Die Vorrichtung zur Datenverarbeitung kann nach vorteilhaften Ausführungsformen dazu eingerichtet sein, das Feldgerät dazu zu veranlassen, ausführbare Zertifikatsdaten, die auf das Betriebssystem des Endgeräts abgestimmt sind, an das Endgerät über die Netzwerkschnittstelle zu senden.

Nach vorteilhaften Ausführungsformen ist das Feldgerät dazu eingerichtet, in Reaktion auf den Empfang der mindestens einen Information betreffend das Betriebssystem des Endgeräts die ausführbaren Zertifikatsdaten zum Versand an das Endgerät aus einem Datenspeicher des Feldgeräts in Abhängigkeit von der mindestens einen Information zum Versand auszuwählen. Dies kann erfindungsgemäß durch die Vorrichtung zur Datenverarbeitung vorgenommen werden.

Ferner kann das Feldgerät dazu eingerichtet sein, die ausführbaren Zertifikatsdaten von einer Gegenstelle über die Netzwerkschnittstelle zu empfangen. Die Vorrichtung zur Datenverarbeitung kann insbesondere dazu eingerichtet sein, eine Speicherung der von der Gegenstelle erhaltenen ausführbaren Zertifikatsdaten in einem Datenspeicher des Feldgeräts zu veranlassen. Es ist weiter vorteilhaft, wenn das Feldgerät dazu eingerichtet ist, in Reaktion auf den Empfang der mindestens einen Information betreffend das Betriebssystem des Endgeräts die ausführbaren Zertifikatsdaten so generiert, dass sie zur Installation des digitalen Zertifikats auf dem Betriebssystem des Endgeräts geeignet sind. Die Generierung der Zertifikatsdaten erfolgt vorteilhaft mittels der Vorrichtung zur Datenverarbeitung des Feldgeräts.

Vorteilhaft kann das Feldgerät dazu eingerichtet sein, das digitale Zertifikat über die Netzwerkschnittstelle zu empfangen, ausführbare Zertifikatsdaten zu generieren, insbesondere mittels der Vorrichtung zur Datenverarbeitung des Feldgeräts, und die ausführbaren Zertifikatsdaten in dem Datenspeicher des Feldgeräts zu speichern. Es versteht sich, dass die ausführbaren Zertifikatsdaten erfindungsgemäß in einer ausführbaren Datei enthalten sein können, wobei die Datei nach Ausführungsformen der Erfindung eine ausführbare Binärdatei oder eine Skriptdatei sein kann.

Das Feldgerät kann ferner dazu eingerichtet sein, eine Anfrage zum Aufbau einer Verbindung über das gesicherte Datenübertragungsprotokoll zu empfangen. Dies erfolgt bevorzugt über die Netzwerkschnittstelle des Feldgeräts. Das Feldgerät kann dazu eingerichtet sein, in Reaktion auf den Erhalt der Anfrage Authentifizierungsdaten an das Endgerät zu senden. Im Anschluss kann eine Kommunikation über das gesicherte Datenübertragungsprotokoll durch das Endgerät und das Feldgerät erfolgen, insofern eine Überprüfung der Authentifizierungsdaten durch das Endgerät erfolgreich war. Bei dem gesicherten Datenübertragungsprotokoll kann es sich erfindungsgemäß um das HTTPS-Protokoll handeln. Das digitale Zertifikat kann erfindungsgemäß ein X.509-Zertifikat sein.

Nach einem weiteren Aspekt der Erfindung wird ein computerimplementiertes Verfahren zur Ausführung auf einem Feldgerät mit einer Netzwerkschnittstelle vorgeschlagen. Das computerimplementierte Verfahren umfasst zumindest die folgenden Schritte: Empfang einer Anfrage zur Übermittlung eines digitalen Zertifikats von einem Endgerät mittels der Netzwerkschnittstelle, wobei das digitale Zertifikat dem Feldgerät zugeordnet ist und zum Nachweis einer Identität des Feldgeräts bei einer Kommunikation mit dem Feldgerät über ein gesichertes Datenübertragungsprotokoll vorgesehen ist, und, in Reaktion auf den Empfang der Anfrage zur Übermittlung des digitalen Zertifikats, Auslösung eines Versands von ausführbaren Zertifikatsdaten an das Endgerät mittels der Netzwerkschnittstelle, wobei die ausführbaren Zertifikatsdaten ausführbare Instruktionen und das digitale Zertifikat umfassen. Das Verfahren wird bevorzugt durch die Vorrichtung zur Datenverarbeitung des vorhergehend beschriebenen Feldgeräts ausgeführt. Das computerimplementierte Verfahren kann erfindungsgemäß in beliebigen Abwandlungen durchgeführt werden, um Funktionen des vorangehend beschriebenen Feldgeräts umzusetzen.

Die Erfindung wird anhand der Zeichnungen beispielhaft erläutert. Dabei zeigt:
Fig. 1 eine schematische Darstellung eines Feldgeräts und eines Endgeräts,
Fig. 2 ein Sequenzdiagramm zur Inbetriebnahme eines digitalen Zertifikats des Feldgeräts auf dem Endgerät und
Fig. 3 eine schematische Darstellung ausführbarer Zertifikatsdaten.

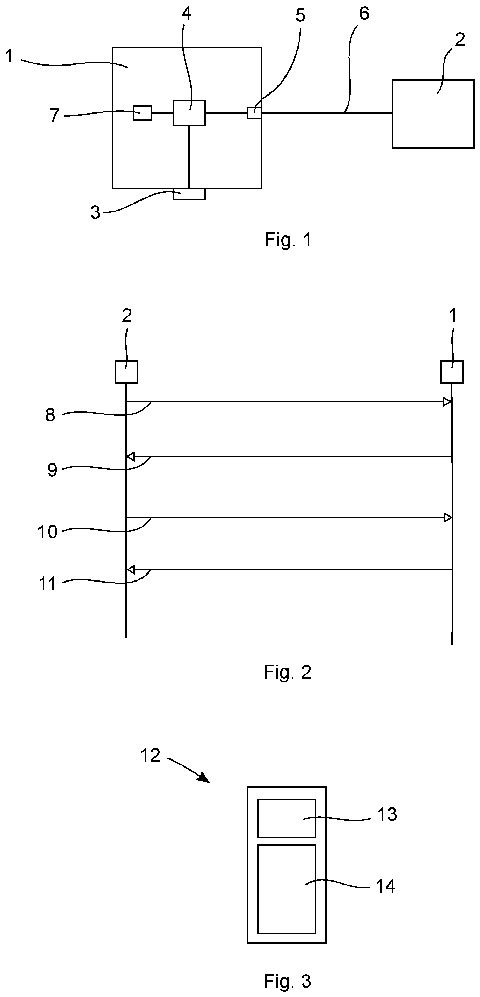

Fig. 1 zeigt eine schematische Darstellung eines Feldgeräts 1 und eines Endgeräts 2. Das Feldgerät 1 weist einen Sensor 3 zur Messung eines Drucks auf. Der Sensor 3 ist mit einer Vorrichtung zur Datenverarbeitung 4 verbunden, die von dem Sensor 3 erfasste Messwerte speichern und auswerten kann. Die Vorrichtung zur Datenverarbeitung 4 ist ein leistungsfähiger Microcontroller, auf dem eine Webserver-Applikation betrieben wird. Die Vorrichtung zur Datenverarbeitung 4 ist ferner mit einer Netzwerkschnittstelle 5 des Feldgeräts 1 verbunden. Die Webserver-Applikation stellt ein Benutzer-Interface des Feldgeräts 1 bereit. Ein Endgerät 2 kann über eine Netzwerkverbindung 6 auf das Benutzerinterface zugreifen, um Einstellungen an dem Feldgerät 1 vorzunehmen. Das Feldgerät 1 ist ferner mit einem Datenspeicher 7 ausgestattet, der mit der Vorrichtung zur Datenverarbeitung 4 des Feldgeräts 1 verbunden ist.

Fig. 2 zeigt ein Sequenzdiagramm zur Inbetriebnahme eines digitalen Zertifikats des Feldgeräts 1 auf dem Endgerät 2. In einem ersten Schritt sendet das Endgerät 2 eine Zertifikatsanfrage 8 zur Übermittlung des digitalen Zertifikats an das Feldgerät 1 über die Netzwerkverbindung. Die Zertifikatsanfrage 8 wird ausgelöst, indem ein Benutzer des Endgeräts 2 ein Feld zum Download des Zertifikats in dem Benutzerinterface betätigt, das das Feldgerät 1 über seine Netzwerkschnittstelle bereitstellt. In dem Benutzerinterface des Feldgeräts 1 wählt der Benutzer zuvor sein Betriebssystem aus, sodass in der Zertifikatsanfrage 8 auch eine Information betreffend das Betriebssystem des Endgeräts 2 enthalten ist.

Nach dem Erhalt der Zertifikatsanfrage 8 und der Information zum Betriebssystem des Endgeräts 2 generiert die Vorrichtung zur Datenverarbeitung des Feldgeräts 1 ausführbare Zertifikatsdaten. Die ausführbaren Zertifikatsdaten enthalten ein digitales Zertifikat des Endgeräts 2 sowie ausführbare Instruktionen. Das Feldgerät 1 generiert die ausführbaren Instruktionen so, dass sie zur Ausführung auf dem Endgerät 2 geeignet sind. Dafür wird die Information zu dem Betriebssystem des Endgeräts 2 ausgewertet. Zur Erstellung der ausführbaren Zertifikatsdaten wird vorangehend das digitale Zertifikat aus dem Datenspeicher des Feldgeräts 1 geladen. Das Feldgerät 1 veranlasst nun einen Instruktionsversand 9, wobei die ausführbaren Zertifikatsdaten an das Endgerät 2 versandt werden. Die Zertifikatsanfrage 8 und der Instruktionsversand 9 erfolgen über das HTTP-Protokoll.

Das Endgerät 2 empfängt die ausführbaren Zertifikatsdaten. Ein Benutzer löst nun eine Ausführung der ausführbaren Zertifikatsdaten auf dem Endgerät 2 aus, wodurch das digitale Zertifikat auf dem Endgerät 2 installiert werden. Das digitale Zertifikat wird dabei in einen Zertifikatsspeicher des Endgeräts 2 kopiert. Nun kann eine HTTPS-Verbindung zwischen dem Feldgerät 1 und dem Endgerät 2 aufgebaut werden. Das Endgerät 2 stellt dazu eine Verbindungsanfrage 10 an das Feldgerät 1, wodurch eine Initialisierung des HTTPS-Protokolls angestoßen wird. Nach dem Erhalt der Verbindungsanfrage 10 löst das Feldgerät 1 einen Zertifikatsversand 11 an das Endgerät 2 aus, wobei das Feldgerät 1 das digitale Zertifikat an das Endgerät 2 übermittelt. Das Endgerät 2 gleicht das so erhaltene digitale Zertifikat mit dem digitalen Zertifikat ab, das in seinem Zertifikatsspeicher hinterlegt ist, um das digitale Zertifikat zu validieren. So wird das Feldgerät 1 authentifiziert. Darauf folgen noch hier nicht dargestellte Schritte zum Abschluss der Initialisierung des HTTPS-Protokolls. Im Anschluss kann eine verschlüsselte Kommunikation zwischen dem Feldgerät 1 und dem Endgerät 2 über das HTTPS-Protokoll erfolgen.

Fig. 3 zeigt eine schematische Darstellung ausführbarer Zertifikatsdaten 12. Die ausführbaren Zertifikatsdaten 12 werden durch eine Skriptdatei gebildet, die das digitale Zertifikat 13 enthält. Neben dem digitalen Zertifikat 13 enthält die SkriptDatei auch ausführbare Instruktionen 14. Wenn die ausführbaren Zertifikatsdaten 12 auf dem Endgerät aufgerufen werden, dann werden die ausführbaren Instruktionen 14 ausgeführt. Dadurch wird das digitale Zertifikat 13 in den Zertifikatsspeicher des Endgeräts kopiert.

### Bezugszeichenliste

- 1: Feldgerät
- 2: Endgerät
- 3: Sensor
- 4: Vorrichtung zur Datenverarbeitung
- 5: Netzwerkschnittstelle
- 6: Netzwerkverbindung
- 7: Datenspeicher
- 8: Zertifikatsanfrage
- 9: Instruktionsversand
- 10: Verbindungsanfrage
- 11: Zertifikatsversand
- 12: Ausführbare Zertifikatsdaten
- 13: Digitales Zertifikat
- 14: Ausführbare Instruktionen

## Patentansprüche

1. Verfahren zur Inbetriebnahme eines digitalen Zertifikats (13) eines Feldgeräts (1) auf einem Endgerät (2), wobei das digitale Zertifikat (13) dem Feldgerät (1) zugeordnet ist und zum Nachweis einer Identität des Feldgeräts (1) bei einer Kommunikation mit dem Feldgerät (1) über ein gesichertes Datenübertragungsprotokoll vorgesehen ist, wobei das Verfahren umfasst:
- Versand einer Anfrage zur Übermittlung des digitalen Zertifikats (13) an das Feldgerät (1) durch das Endgerät (2),
- Empfang der Anfrage zur Übermittlung des digitalen Zertifikats (13) durch das Feldgerät (1),
- in Reaktion auf den Empfang der Anfrage zur Übermittlung des digitalen Zertifikats (13), Versand von ausführbaren Zertifikatsdaten (12) durch das Feldgerät (1) an das Endgerät (2), wobei die ausführbaren Zertifikatsdaten (12) ausführbare Instruktionen (14) und das digitale Zertifikat (13) umfassen,
- Empfang der ausführbaren Zertifikatsdaten (12) durch das Endgerät (2), und
- nach dem Empfang der ausführbaren Zertifikatsdaten (12) durch das Endgerät (2), Ausführung der ausführbaren Zertifikatsdaten (12) durch das Endgerät (2), wodurch das digitale Zertifikat (13) auf dem Endgerät (2) installiert wird.

2. Verfahren nach Anspruch 1,
**dadurch gekennzeichnet, dass**
das Verfahren ferner umfasst:
- Versand mindestens einer Information betreffend ein Betriebssystem des Endgeräts (2) von dem Endgerät (2) an das Feldgerät (1), und
- Empfang der mindestens einen Information betreffend das Betriebssystem des Endgeräts (2) durch das Feldgerät (1),
wobei die ausführbaren Zertifikatsdaten (12), die das Feldgerät (1) an das Endgerät (2) sendet, auf das Betriebssystem des Endgeräts (2) abgestimmt sind.

3. Verfahren nach Anspruch 2,
**dadurch gekennzeichnet, dass**
das Feldgerät (1) in Reaktion auf den Empfang der mindestens einen Information betreffend das Betriebssystem des Endgeräts (2) die ausführbaren Zertifikatsdaten (12) zum Versand an das Endgerät (2) aus einem Datenspeicher (7) des Feldgeräts (1) in Abhängigkeit von der mindestens einen Information zum Versand an das Endgerät (2) auswählt.

4. Verfahren nach einem der vorhergehenden Ansprüche,
**dadurch gekennzeichnet, dass**
das Verfahren ferner umfasst:
- Empfang der ausführbaren Zertifikatsdaten (12) von einer Gegenstelle durch das Feldgerät (1),
- Speicherung der ausführbaren Zertifikatsdaten (12) durch das Feldgerät (1).

5. Verfahren nach Anspruch 2,
**dadurch gekennzeichnet, dass**
das Feldgerät (1) in Reaktion auf den Empfang der mindestens einen Information betreffend das Betriebssystem des Endgeräts (2) die ausführbaren Zertifikatsdaten (12) so generiert, dass sie zur Installation des digitalen Zertifikats (13) auf dem Betriebssystem des Endgeräts (2) geeignet sind.

6. Verfahren nach einem der Ansprüche 1 oder 2 oder nach Anspruch 5,
**dadurch gekennzeichnet, dass**
das Verfahren ferner umfasst:
- Empfang des digitalen Zertifikats (13) durch das Feldgerät (1) von einer Gegenstelle,
- Generierung der ausführbaren Zertifikatsdaten (12) durch das Feldgerät (1), und
- Speicherung der ausführbaren Zertifikatsdaten (12) durch das Feldgerät (1).

7. Verfahren nach einem der vorhergehenden Ansprüche,
**dadurch gekennzeichnet, dass**
die ausführbaren Zertifikatsdaten (12) in einer ausführbaren Datei enthalten sind.

8. Verfahren nach Anspruch 7,
**dadurch gekennzeichnet, dass**
die Datei eine ausführbare Binärdatei ist.

9. Verfahren nach Anspruch 7,
**dadurch gekennzeichnet, dass**
die Datei eine Skriptdatei ist.

10. Verfahren nach einem der vorhergehenden Ansprüche
**dadurch gekennzeichnet, dass**
das Endgerät (2) bei der Ausführung der ausführbaren Zertifikatsdaten (12) zumindest die folgenden Schritte durchführt:
- falls sich das Endgerät (2) nicht in einem Administratormodus befindet, Erstellung einer Benutzeranfrage zum Wechsel des Endgeräts (2) in den Administratormodus, und, falls in Reaktion auf die Benutzeranfrage eine Benutzereingabe auf dem Endgerät (2) erfolgt, die den Wechsel in den Administratormodus freigibt:
∘ Wechseln des Endgeräts (2) in den Administratormodus und
∘ Kopieren des digitalen Zertifikats (13) in einen Zertifikatsspeicher des Endgeräts (2),
- falls sich das Endgerät (2) bereits in dem Administratormodus befindet, Kopieren des digitalen Zertifikats (13) in den Zertifikatsspeicher des Endgeräts (2).

11. Verfahren nach einem der vorhergehenden Ansprüche,
**dadurch gekennzeichnet, dass**
das Verfahren ferner umfasst:
- nach der Installation des digitalen Zertifikats (13) auf dem Endgerät (2), Versand einer Anfrage zum Aufbau einer Verbindung über das gesicherte Datenübertragungsprotokoll durch das Endgerät (2) an das Feldgerät (1),
- Empfang der Anfrage zum Aufbau der Verbindung über das gesicherte Datenübertragungsprotokoll durch das Feldgerät (1),
- Übermittlung von Authentifizierungsdaten durch das Feldgerät (1) an das Endgerät (2),
- Überprüfung der Authentifizierungsdaten durch das Endgerät (2) anhand des digitalen Zertifikats (13), und
- falls die Überprüfung erfolgreich ist, Kommunikation über das gesicherte Datenübertragungsprotokoll durch das Endgerät (2) und das Feldgerät (1).

12. Verfahren nach einem der vorhergehenden Ansprüche,
**dadurch gekennzeichnet, dass**
das gesicherte Datenübertragungsprotokoll das HTTPS-Protokoll ist.

13. Verfahren nach einem der vorhergehenden Ansprüche,
**dadurch gekennzeichnet, dass**
das digitale Zertifikat (13) ein X.509-Zertifikat ist.

14. Feldgerät (1) mit einem Sensor (3) zur Erfassung eines Messwerts, mit einer Netzwerkschnittstelle (5) und mit einer Vorrichtung zur Datenverarbeitung (4), wobei die Vorrichtung zur Datenverarbeitung (4) dazu eingerichtet ist, eine Bedienmöglichkeit zur Bedienung des Feldgeräts (1) mittels der Netzwerkschnittstelle (5) über ein gesichertes Datenübertragungsprotokoll bereitzustellen, und wobei die Vorrichtung zur Datenverarbeitung (4) ferner dazu eingerichtet ist:
- eine Anfrage zur Übermittlung eines digitalen Zertifikats (13) von einem Endgerät (2) mittels der Netzwerkschnittstelle (5) zu empfangen, wobei das digitale Zertifikat (13) dem Feldgerät (1) zugeordnet ist und zum Nachweis einer Identität des Feldgeräts (1) bei einer Kommunikation mit dem Feldgerät (1) über das gesicherte Datenübertragungsprotokoll vorgesehen ist,
- in Reaktion auf den Empfang der Anfrage zur Übermittlung des digitalen Zertifikats (13) einen Versand von ausführbaren Zertifikatsdaten (12) an das Endgerät (2) mittels der Netzwerkschnittstelle (5) auszulösen, wobei die ausführbaren Zertifikatsdaten (12) ausführbare Instruktionen (14) und das digitale Zertifikat (13) umfassen.

15. Computerimplementiertes Verfahren zur Ausführung auf einem Feldgerät (1) mit einer Netzwerkschnittstelle (5), umfassend:
- Empfang einer Anfrage zur Übermittlung eines digitalen Zertifikats (13) von einem Endgerät (2) mittels der Netzwerkschnittstelle (5), wobei das digitale Zertifikat (13) dem Feldgerät (1) zugeordnet ist und zum Nachweis einer Identität des Feldgeräts (1) bei einer Kommunikation mit dem Feldgerät (1) über ein gesichertes Datenübertragungsprotokoll vorgesehen ist,
- in Reaktion auf den Empfang der Anfrage zur Übermittlung des digitalen Zertifikats (13), Auslösung eines Versands von ausführbaren Zertifikatsdaten (12) an das Endgerät (2) mittels der Netzwerkschnittstelle (5), wobei die ausführbaren Zertifikatsdaten (12) ausführbare Instruktionen (14) und das digitale Zertifikat (13) umfassen.
